# EUROPEAN PATENT SPECIFICATION

(11) **EP 2 793 653 B1**
(45) Date of publication and mention of the grant of the patent: **20.04.2016**
(21) Application number: 12812826.1
(22) Date of filing: 12.12.2012
(51) Int. Cl.: F16B 12/24, A47B 47/00, A47B 87/02

(54) **MODULAR SYSTEM AND MODULE FOR SAID MODULAR SYSTEM**
MODULARES SYSTEM UND MODUL FÜR SOLCHES SYSTEM
SYSTÈME MODULAIRE ET MODULE POUR LEDIT SYSTÈME

(30) Priority: 20.12.2011 DK 201100984
(43) Date of publication of application: 29.10.2014
(73) Proprietor: HDN Holding ApS, 6040 Egtved (DK)
(72) Inventor: Nielsen, Jørgen, DK-6040 Egtved (DK)
(74) Representative: Chas. Hude A/S
(86) International application number: PCT/DK2012/050459
(87) International publication number: WO 2013/091636

(56) References cited:
- WO-A1-2009/126282
- FR-A1- 2 960 139
- US-A- 3 790 241

## Description

### Technical Field

The invention relates to a modular system comprising at least to modules, said modules comprising a shelf top panel and an oppositely placed shelf bottom panel, said two panels being mutually connected by a first shelf side panel and an oppositely placed second shelf side panel for providing a box-shaped module comprising an outer top surface and an outer bottom surface, said modular system comprising positioning means adapted for positioning and engaging with the top surface of a module and with the bottom surface of a second module, and said modular system further comprising at least an extension panel comprising an upper extension surface and a lower extension surface, further the upper extension surface faces the bottom surface, further the lower extension surface faces the top surface, said extension panel comprising fastening means adapted so as to engage with the positioning means, whereby the extension panel is secured.

### Background

US 2007/0158347 describes a stackable receptacle system comprising box-shaped bins which are stackable by means of a complicated groove/recess system for a joined storage unit consisting of number of box-shaped bin/receptacle units. The assembly is performed by the longitudinal laterally facing edges of a box abut the corresponding area of a second box and thus by way of the groove/recess system is joined in the entire edge area with the second edge area. The assembly method of the system is rather complicated and does not provide any specific flexibility in the assembly as a compact and uniform partition construction is provided by this method, in which the partition is produced by boxes abutting boxes.

Further, US 4,389,808 describes a modular system comprising box-shaped units which are mutually connectable by means of a screw/bolt system placed visibly in the units at the middle of the bottom board or top board, with which extension boards may be connected. Tools are required for assembling the system, and as the joining elements are placed at the middle of the boards, the use thereof is obviously impaired, regardless of whether the modular system is to be used as a book case, where the books collide with the large nut or whether the system is to be used as a table, where the joining elements disturb the plane surface. A modular system which discloses the preamble of claim 1 is known from FR 2 960 139 A1. This document also discloses the preamble of claim 9, that is to say a module for a modular system according to any of claims 1-8.

### Disclosure of the Invention

The aspect of the present invention is to provide a system without the disadvantages of the above system or to provide a useful alternative. The invention achieves inter alia a simple system for joining/connecting modules such that the modules are fastened to each other in a unique way, but also very simple and secure way.

This is achieved by way of a modular system as described in the introduction, and where the positioning means are placed at the periphery of the outer top surface and the outer bottom surface along the edge which is provided between the shelf top panel and the two shelf side panels and the shelf bottom panel and the two shelf side panels respectively at a distance d from said edges and in that the fastening means (12) of the extension panel (8) are placed at the same distance d from two of the delimiting side edges of the extension panel, said side edges being placed opposite from each other.

The positioning system provides a high degree of flexibility in the construction so that the boxes do not necessarily have to be placed box by box, there may even be some space between them, and more shelves than normally may be provided. The positioning system allows insertion of additional boards between the individual modules. Said boards may protrude both laterally or at the front/the rear, or just sit between two boxes which are placed on top of each other. In the latter case, either the entire surface area of the extension panel or part thereof is placed against the top surface or the outer bottom surface of the module. Thereby, an additional area is created which will provide a visual delimitation between the two modules, and at the same time, the boards can also be used as an extra protruding shelf. The contents of the module may thus be organised visually in that specific colour patterns or other markings may be added to said additional extension panels. The additional board may also provide more visual continuity between the modules, e.g. when it has a very specific colour which will continue horizontally throughout the assembled modular system.

Further, it is achieved that the modular system may be extended when necessary. It is even possible to insert a desk top as the extension panel may be arranged between the upper and bottom surfaces of two modules at one side and correspondingly at the other side. Thus, said modules provide the support for and the securing of the extension panel which can also provide support for an additional panel. This means that it is also possible to add an extra shelf without thus having to add a new module. This makes it more flexible, visually less compact and cheaper than other known systems. The extension panel ensures that the system is laterally stable so that it cannot topple over, while the positioning means ensure that the modules may be built upwards in a precise and stable way.

A further embodiment according to the invention provides a modular system in which the modules are square or rectangular boxes. This is an advantageous shape of the modules.

The invention provides a modular system in which the positioning means comprises a pater/mater arrangement such that a top surface on a first module comprises a mater part, and the adjacent bottom surface on a second module also comprises a mater part, and that the pater part is provided by means of detachable dowel, the two delimiting end parts of the dowel being adapted to be placed in each their mater part. By constructing the positioning means this way, it is achieved that the modules are easily transported and that by assembly thereof for providing a modular system, great flexibility and stability are achieved.

A further embodiment according to the invention provides a modular system in which the detachable dowel comprises a middle section adapted so as to engage with the fastening means of the extension panel, said extension panel being adapted to be secured in a position between the two modules. Thereby, it is achieved that the extension panel sits in a stable way between the two modules while also being able to have various horizontal positions as the front edge of the extension panel may be flush with the front edge of the modules or sit back and/or be pushed laterally in relation to the modules.

A further embodiment according to the invention provides a modular system in which the edges of the extension panel comprise a marking, for instance a colour or a pattern. By this, it is possible to mark the contents of the individual modules. It is also possible to achieve an aesthetic and continuous appearance.

A further embodiment according to the invention provides a modular system in which the extension panel is made in a fibre-optic material and is designed to emit light along its edges. By this, it is achieved that the modules may be illuminated thus increasing their range of use.

The invention provides a modular system modular system in which the mater part of the positioning means comprises recesses, e.g. in the form of bores/holes, for reception of the pater part in the form of respective dowels, the longitudinal axis of said dowels being essentially perpendicular on the surface from which they protrude, and said longitudinal axis being axis-parallel with the longitudinal axis of the recess. By this, a simple construction is achieved. The cross-sectional geometry of both the dowels and the bores may be circular, oval, square, rectangular etc. It is, however, important that the dowels fit into the recess by press fit or slide fit.

A further embodiment according to the invention provides a modular system in which the bores are placed in the top surface and in the bottom surface, said bores being positioned at the distance d from the delimiting edge of the surfaces, said edge abutting the shelf side panels.

The invention provides a modular system in which the bores are placed in the delimiting edge surface of the first shelf side panel and the second side panel and axis-parallel with the plane side surfaces of the side panels, said delimiting edge surfaces constituting a part of the top surface and the bottom surface. By placement in the delimiting edge, it is easy to manufacture the unit with regard to process technique.

A further embodiment according to the invention provides a modular system in which the distance d is 2-10 mm measured from the periphery of d to the edge of the module.

A further embodiment according to the invention provides a modular system in which the bores placed in each delimiting edge surface comprise two separate bores/holes placed symmetrically around the centre line of the top and bottom surfaces. By this, it is possible to offset the extension panel the distance corresponding to the rear edge of the top or bottom surface towards and up to the first recess in said surface. Then, the extension panel will protrude essentially a corresponding distance in relation to the front edge of the surfaces as the surface range of the extension surface as regards shape and area is identical with the surface range of both the top and bottom surfaces. In other words, the surfaces are congruent.

A further embodiment according to the invention provides a modular system in which the system comprises several modules and several extension panels, and in which at least one extension panel is placed between the top and bottom surfaces of two adjacent modules. By this, a complete shelf system is built which may in principle be assembled in many different ways. The system is a kind of do-it-yourself kit.

A further embodiment according to the invention provides a modular system in which the fastening means of the extension panel comprise two through-going holes in the extension panel along one of the delimiting edges, said through-going holes being symmetrically placed in relation to the centre line of the panel, as well as two extension panel holes placed opposite each other along the oppositely placed delimiting edge, whereby said extension panel comprises four extension panel holes having a diameter essentially identical with the diameter of the positioning means. This is a simple and economical way of securing the extension panel.

A further embodiment according to the invention provides a modular system in which the extension panel holes are placed such that they are adapted to engage with the positioning means, said extension panel holes being through-going in the extension panel. This is easily achieved by placing four dowels in the bores in the top surface of a module. The extension panel is placed on top such that the dowels go through at least the two holes. Use of the two holes is relevant when the extension panel is protruding and provides extra shelf space, whereas all four holes are used when the panel is used to delimit or illuminate and such that its front edge is flush with the front edges of the modules. The dowels are so long that the rear part protrudes from the extension panel and such that the bottom surface of a second module and its recesses envelop the dowels protruding upwards.

A further embodiment according to the invention provides a modular system in which the system comprises at least to modules placed vertically on top of each other and such that the outer surfaces of the first and the second shelf side panels are flush with each other, as well as an extension panel placed between the top surface and the bottom surface of the two modules, and in that the positioning means grip/engage with the fastening means of the extension panel, whereby the extension panel is secured in a position between the two modules.

A further embodiment according to the invention provides a modular system in which the shelf top panel and the shelf bottom panel have the same geometry and dimension in each module, said panels being shaped as rectangular or square boards. Thereby, it is ensured that the modules may be stacked on top of each other without any protruding parts unless they are intentionally stacked offset in relation to each other.

A further embodiment according to the invention provides a modular system in which each module is constructed by rectangular or square boards, said boards being joined by joining elements for providing the box-shaped module, and in which the two shelf side panels have delimiting edges, which are part of the outer top surface and outer bottom surface, and in which the positioning means are placed in said delimiting edges. By this it is achieved that the individual modules are easy to manufacture as they can be mass-manufactured as the boards only have to be cut into suitable sizes. Likewise, the individual units may be shipped in kit form, where said boards with joining means take up very little space in comparison with known modules already being assembled voluminous units. Primarily, the joining elements are placed at the top or bottom of the module so as not to be visible.

Finally, the placement of the positioning means ensures that when the modules are stacked on top of each other, a good transmission of force is achieved as this way, it is the side edges of the side panels resting against each other, but with the option of an extension panel being pushed between them so that the transmission of force takes place by way of this.

A further embodiment according to the invention provides a modular system comprising a rear side panel in the shape of a rectangular or square board, the circumference of said board being congruent with the inside cross section of the module such that the edges of the rear side panel are surrounded by and are abutting the surfaces facing the inner cavity of the module. By this, good stability of the individual module is achieved in that the rear board is pushed 1-2 cm inwards in relation to the outer delimiting edge of the box. Thus, the rear side panel attributes to ensuring that the box cannot be twisted and helps absorbing forces in vertical direction.

The invention also provides a module for a system, said module comprising a shelf top panel, and an oppositely placed shelf bottom panel, said two panels being connected with each other by a first shelf side panel and an oppositely placed second shelf side panel for providing a box-shaped module comprising a top surface and a bottom surface, said module comprising positioning means adapted for positioning a module to a second module, further the positioning means comprise a pater/mater arrangement, such that a top surface of the module comprises a mater part, and that the pater part is provided by a detachable dowel, the two delimiting end parts of the dowel being adapted to be placed respectively in the mater part of the module and in the mater part located on the adjacent bottom surface of an additional module.

A further embodiment according to the invention provides a module, in which the panels are separate boards joined by joining elements, and in which the module comprises a rear side panel in the shape of a square or rectangular board, the circumference of said board being congruent with the inside cross section of the module such that the edges of the rear side panel are surrounded by and are abutting the surfaces facing the inner cavity of the module.

### Brief Description of the Drawing(s)

The invention is explained in detail below with reference to the drawing(s), in which
Fig. 1 shows a module and an extension panel as well as positioning means and fastening means according to the invention.
Fig. 2 shows a first embodiment of a modular system according to the invention.
Fig. 3 shows a second embodiment of a modular system according to the invention.
Fig. 4 shows a third embodiment of a modular system according to the invention.

### Detailed description of the Invention

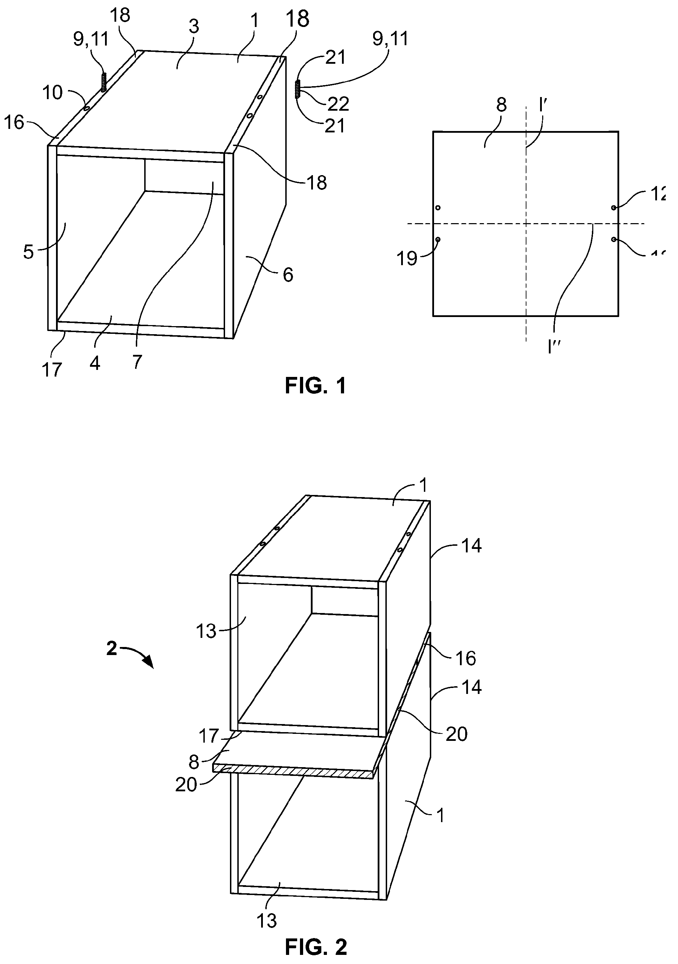

Fig. 1 shows a module (1) as well as an extension panel (8). The module (1) is box-shaped and is in this case in cubiform, but could also be rectangular with the longitudinal axis either in the length or the height. The module (1) comprises a shelf bottom panel (4), a shelf top panel (2) placed opposite, and shelf side panels, a first shelf side panel (5) as well as a second shelf side panel (6) placed opposite which are screwed together with the two other panels (3, 4) in the typical way by means of known screw mechanisms. Both the outer surfaces of the module (1) and the inner surfaces are plane. Thus, the module is constructed by plane boards/panels, e.g. of veneer or wood, plastic or the like. The actual extension panel (8) is also a plane board, in this case with an area and geometry having an extent which would be congruent with the top surface (16) or bottom surface (17) of module 1 or cover either surface precisely if placed thereon.

The top surface (16) or bottom surface (17) of module 1 is formed by the shelf top panel (3) and the shelf bottom panel 4, respectively, and the delimiting edge surface (18) of the first and the second side panels (5, 6), respectively, as the module is assembled by placing the delimiting edge surfaces (18) of the side panels end to end with the outer surface of the shelf top panel (3) and the shelf bottom panel (4), respectively. Thereby, the top surface (16) and the bottom surface (17) are provided. The module comprises positioning means (9) for positioning and securing the mutual relation between the modules. These are provided as cavities, e.g. bores (10), in the delimiting edge surface (18) of the side panels. Said bores (10) have a depth and size enabling them to envelop a dowel (11) by press fit or slide fit, said dowel (11) being pressed down into the bores (10).

In total, there are four bores having a longitudinal axis which is parallel with the surface area of the side panels and perpendicular on the surface from which they protrude. The bores (10) are placed symmetrically around the centre lines of the top (16) and bottom (17) surfaces, i.e. the centre lines extending from front to rear I' as well as the centre line extending from side to side I". The distance from the centre of the bore to said centre line I" is approx. 3 cm in front/rear direction and approx. 18 cm in the other direction perpendicular thereon. The measurements apply to a cubiformed module. If for instance a rectangular is used, the distance will obviously be considerably larger. The actual fastening means (12) on the extension panel (8) are constituted by corresponding bores/extension panel holes (19) of which there are thus also four. These are placed in such way that they fit the bores (10) in the module (1) precisely when the extension panel is placed on either the top surface (16) or the bottom surface (17) and covers this 100 per cent. The actual dowel (11) consists of two end parts (21) placed opposite each other and a middle section (22) placed therebetween. By assembly of the modules (1) and the extension panel (8) to a modular system (2), the two end parts (21) will be placed in the upper surface bore belonging to the first module and in the bottom surface bore belonging to the second module, respectively. It is noted that the depth of the modules (1) may vary. The depth will, however, always be of such dimension that it will comprise at least two bores in the top surface (16) and two bores in the bottom surface, the bores being symmetrical around the centre line I".

One of the end parts (21) of the dowel (11) is placed in the bore (10), whereupon the extension panel (8) is placed over the four dowels (11) placed in the holes when the extension panel is to cover the entire top (16) or bottom (17) surface. (This is used for instance when the extension panel is to be used to mark a visual change from a first module to a second module). Thus, the extension panel (8) will be secured by a total of four dowels (11), and the second end part of the dowels are subsequently placed in the bores of an additional module (1) which is placed on top of the former so that the front surface (13) of the module(s) may be flush with the front surface (13) of the lower module. When the extension panel is to be used for providing an additional shelf, only two dowels (11) will be placed in the bores (10), viz. the two front ones, and the rear bores (19) of the extension panel are placed over said dowels (11) and thus envelope the middle section (22) of the dowel (11). The second protruding part of the end part (21) of the dowel is used for placement in the bores of the upper module so that the two modules (1), viz. the upper and lower, have a protruding extension panel (8) between them. This is shown in Fig. 2. The extension panel (8) may be made of a light-emitting material light, it may be made of fibre-optic material, or light may be inbuilt so that luminous parts between the individual modules is achieved during assembly of a shelf system. Likewise, the extension panels may comprise adornments, patters and information of various kinds so that the shelf system may be used to a greater extent for archiving and administration of various units.

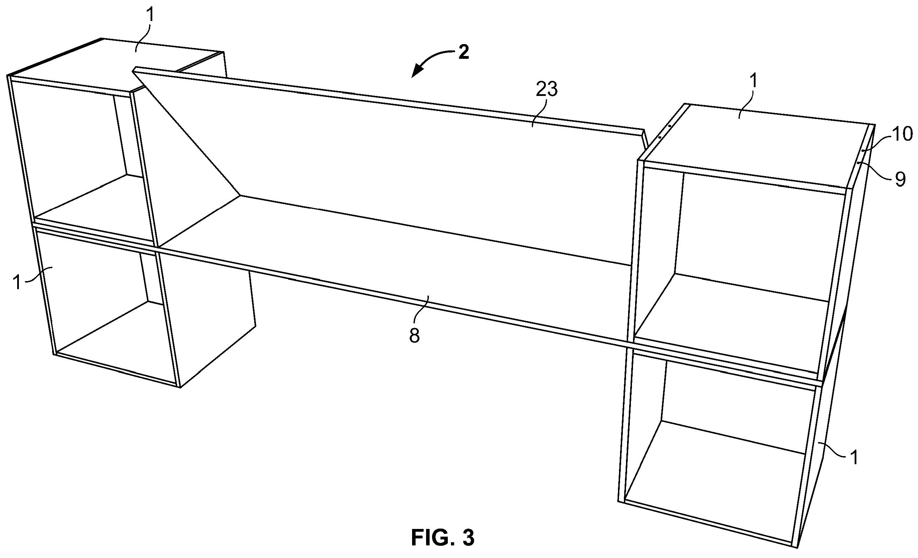

Fig. 3 shows a second embodiment of a modular system (2) according to the invention as this comprises a very long extension panel (8), said extension panel being rectangular and extending from the placement between a left module rack consisting of an upper module (1) and a lower module (1) wherebetween the extension panel (8) is arranged and secured with its fastening means as stated above with reference to Fig. 2. At the other end, the extension panel (8) is also placed between a module rack, i.e. the right side is placed in a corresponding way between upper and lower modules and likewise with its fastening means (12) fixed to their positioning means (9). This way a less compact shelf system is achieved and an additional shelf is provided without having to use several modules (1) which are the expensive part. Further, it is possible to place a loose board (23) on top of the long rectangular extension panel (8), said loose board thus being able to constitute a desk top with extra width. If after the assembly of this system, as shown in Fig. 3, further shelf system are wanted, the modules may obviously be extended as needed as it is possible to build onto the modules placed at the side and obviously, it is also possible to insert additional extension panels (8) with an area extending from the first rack system to the opposite rack system.

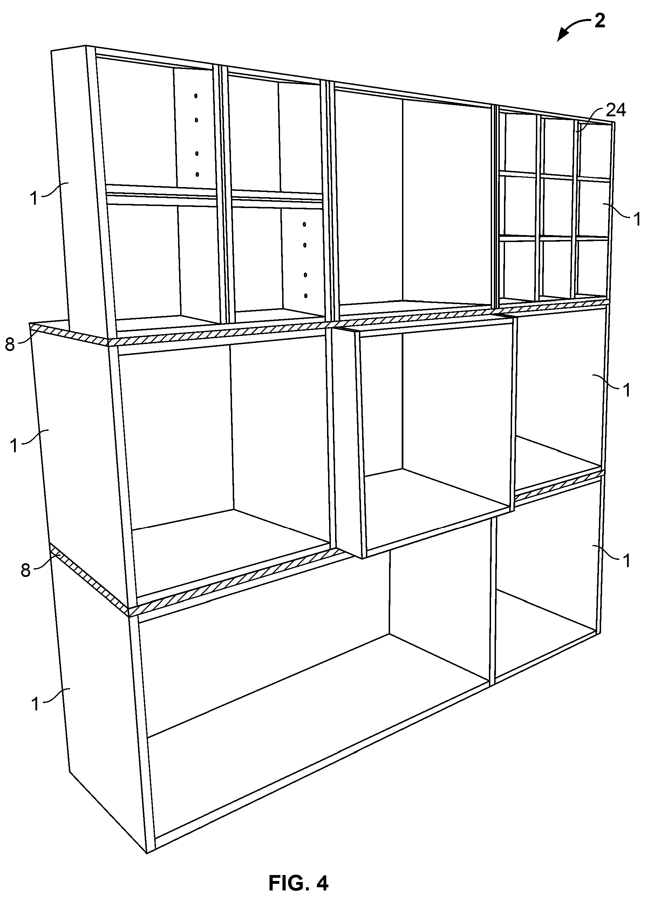

Fig. 4 shows a third embodiment of a modular system (2) according to the invention which is also constructed by the previously described modules (1) and extension panels (8). In this case the modules (1) are shaped in rectangular and square units, but with very different sizes, and as is also evident, the actual modules may naturally also be offset in relation to each other so that a front surface of a module can be offset in relation to the front surface of the module below. Inside the individual modules it is also possible to insert a partition (24) for separating each individual module into even smaller compartments.

It is noted that the shelf top panel (3) and the shelf bottom panel (4) in each module (1) have the same geometry and dimension and are rectangular or square boards.

Each module (1) is comprised by boards being assembled with known joining elements as is known from other types of furniture which can be assembled at home. By assembly of the square or rectangular boards, the box-shaped module (1) is provided. The two shelf side panels (6, 5) have delimiting edges which are part of the outer top (16) and bottom (17) surfaces. The positioning means (9) are placed in said delimiting edges. Thus, each module (1) is a do-it-yourself-kit like the actual modular system (2) as it can be expanded with modules (1) which can have a different size compared to a neighbouring module. It is only essential that the modules can be assembled, and the sizes are therefore fitted so that the positioning means (9) from one module can engage with a second module.

Each module comprises a rear side panel (7) as shown in Fig. 1 in the shape of a square or rectangular board. The circumference of said board is congruent with the inner cross section of the module so that the edges of the rear side panel (7) are enveloped by and abut the surfaces facing the inner cavity of the module.

The rear side panel (7) is pushed 1-2 cm inwards in relation to the outer, rear delimiting edge of the box. Thus, the rear side panel helps ensuring that the box cannot be twisted and helps absorbing forces in vertical direction.

In the embodiments, the positioning means are shown as a pater/mater construction comprising bores with a cylindrical shape and in which a dowel with a corresponding circumference fits, but obviously the construction of the positioning means may also be square, triangular or polygonal hollows in which a corresponding dowel fits, said dowel having an outer geometry corresponding to the inside of the bore. It is essential here that the dowel is detachable so that it can be chosen to insert either four dowels, two dowels or no dowels as naturally, no dowels are used for neither the module bottom surface constituting the bottom of the shelf system nor for the part of the module top surface constituting the upper delimitation of the shelf system. Likewise, only two dowels and thus also two bores are necessary in the module when it is desired to offset the extension panel so that the edge of the extension panel extends further than the front surface of the module from which it protrudes and provides an extra shelf. Therefore, the system is very flexible and enables numerous different constructions and on-going extensions of a given shelf system as it is always possible to buy new modules and new extension panels with various sizes. It is only essential that these are provided with positioning means and fastening means matching each other.

### Reference numerals

Module (1)
Modular system (2)
Shelf top panel (3)
Shelf bottom panel (4)
First shelf side panel (5)
Second shelf side panel (6)
Rear side panel (7)
Extension panel (8)
Positioning means (9)
Bore (10)
Dowel (11)
Fastening means (12)
Front surface (13)
Rear surface (14)
Top surface (16)
Bottom surface (17)
Delimiting edge surface of the side panels (18)
Extension panel bore (19)
Extension panel edges (20)
Dowel end parts 21
Dowel midle section 22
Additional board 23
Partition 24

## Claims

1. Modular system (2) comprising at least two modules (1), said modules comprising a shelf top panel, (3) and an oppositely placed shelf bottom panel (4), said two panels being mutually connected by a first shelf side panel (5) and an oppositely placed second shelf side panel (6) for providing a box-shaped module (1) comprising an outer top surface (16) and an outer bottom surface (17), said modular system (2) comprising positioning means (9) adapted for positioning and engaging with the top surface of a module (1) and with the bottom surface of a second module (1), further the modulare system comprises at least an extension panel (8) comprising an upper extension surface and a tower extension surface, further the upper extension surface faces the bottom surface (17), further the lower extension surface faces the top surface (16), said extension panel (8) comprising fastening means (12) adapted so as to engage with the positioning means (9), whereby the extension panel (8) is secured, said positioning means (9) are placed at the periphery of the outer top surface (16) and the outer bottom surface (17) along the edge which is provided between the shelf top panel (3) and the two shelf side panels (5, 6) and the shelf bottom panel (4) and the two shelf side panels (5, 6) respectively at a distance d from said edges and in that the fastening means (12) of the extension panel (8) are placed at the same distance d from two of the delimiting side edges of the extension panel, said side edges being placed opposite from each other, said positioning means comprises a pater/mater arrangement such that a top surface (16) on a first module (1) comprises a mater part, and the adjacent bottom surface on a second module also comprises a mater part, and that the pater part is provided by means of detachable dowel (11), the two delimiting end parts (21) of the dowel being adapted to be placed in each their mater part and that the mater part of the positioning means comprises recesses, e.g. in the form of bores/holes (10), for reception of the pater part in the form of respective dowels, the longitudinal axis of said dowels (11) being essentially perpendicular on the surface from which they protrude, and said longitudinal axis being axis-parallel with the longitudinal axis of the recess (10), **characterised in that** the bores (10) are placed in the delimiting edge surface (18) of the first shelf side panel (5) and the second side panel (6) is axis-parallel with the plane side surfaces of the side panels, said delimiting edge surfaces (18) constituting a part of the top surface (16) and the bottom surface (17) and that the module comprises a rear side panel (7) in the shape of a rectangular or square board, the circumference (7) of said board being congruent with the inside cross section of the module such that the edges of the rear side panel (7) are surrounded by and are abutting the surfaces facing the inner cavity of the module.

2. Modular system according to claim 1, **characterised in that** the detachable dowel comprises a middle section (22) adapted so as to engage with the fastening means (12) of the extension panel (8), said extension panel (8) being adapted to be secured in a position between the two modules (1).

3. Modular system according to claims 1-2, **characterised in that** the bores (10) are placed in the top surface (16) and in the bottom surface (17), said bores (10) being positioned at the distance d from the delimiting edge of the surfaces, said edge abutting the shelf side panels (5, 6).

4. Modular system according to claims 1-3, **characterised in that** the bores (10) placed in each delimiting edge surface (18) comprise two separate bores/holes (10) placed symmetrically around the centre line (l', l") of the top and bottom surfaces (16, 17).

5. Modular system according to any of the preceding claims, **characterised in that** the fastening means (12) of the extension panel (8) comprise two through-going holes (19) in the extension panel along one of the delimiting edges, said through-going holes (19) being, symmetrically placed in relation to the centre line (l") of the panel, as well as two corresponding oppositely placed through-going holes (19) in the extension panel along the oppositely placed delimiting edge, whereby said extension panel comprises four extension panel holes (19) having a diameter essentially identical with the diameter of the positioning means.

6. Modular system according to any of the preceding claims, **characterised in that** the system comprises at least two modules placed vertically on top of each other and such that the outer surfaces of the first and the second shelf side panels (5, 6) are flush with each other, as well as an extension panel (8) paced between the top surface (16) and the bottom surface (17) of the two modules, and **in that** the positioning means (9) grip/engage with the fastening means (12) of the extension panel (8), whereby the extension panel (8) is secured in a position between the two modules (1).

7. Modular system according to any of the preceding claims, **characterised in that** the shelf top panel and the shelf bottom panel have the same geometry and dimension in each module, said panels being shaped as rectangular or square boards

8. Modular system according to any of the preceding claims, **characterised in that** each module is constructed by rectangular or square boards, said boards being joined by joining elements for providing the box-shaped module, and **in that** the two shelf side panels (5, 6) have delimiting edges, which are part of the outer top surface and outer bottom surface (17), and **in that** the positioning means are placed in said delimiting edges.

9. Module for a modular system according to any of the preceding claims, said module (1) comprising a shelf top panel (3), and an oppositely placed shelf bottom panel (4), said two panels being connected with each other by a first shelf side panel (5) and an oppositely placed second shelf side panel (6) for providing a box-shaped module (1) comprising a top surface (16) and a bottom surface (17), said module (1) comprising positioning means (9) adapted for positioning a module (1) to a second module (1), further the positioning means comprise a pater/mater arrangement, such that a top surface (16) of the module (1) comprises a mater part, and that the pater part is provided by a detachable dowel (11), the two delimiting end parts (21) of the dowel being adapted to be placed respectively in the mater part of the module and in the mater part located on the adjacent bottom surface of an additional module and that the mater part of the positioning means comprise recesses, e.g. in the form of bores/holes (10), for reception of the pater part in the form of respective dowels, the longitudinal axis of said dowels (11) being essentially perpendicular on the surface from which they protrude, and said longitudinal axis being axis-parallel with the longitudinal axis of the recess (10), **characterised in that** the bores (10) are placed in the delimiting edge surface (18) of the first shelf side panel (5) and the second side panel (6) is axis-parallel with the plane side surfaces of the side panels, said delimiting edge surfaces (18) constituting a part of the top surface (16) and the bottom surface (17) and that the module comprises a rear side panel (7) in the shape of a rectangular or square board, the circumference (7) of said board being congruent with the preside cross section of the module such that the edges of the rear side panel (7) are surrounded by and are abutting the surfaces facing the inner cavity of the module.

## Patentansprüche

1. Modulares System (2) umfassend mindestens zwei Module (1), jene Module umfassend eine Regaldeckenplatte (3) und eine gegenüberliegende Regalbodenplatte (4), wobei jene zwei Platten miteinander über eine erste Regalseitenplatte (5) und eine gegenüberliegende zweite Regalseitenplatte (6) verbunden sind, um ein kastenförmiges Modul (1) umfassend eine äußere Deckenoberfläche (16) und eine äußere Bodenfläche (17) bereitzustellen, wobei jenes modulare System (2) Positionierungsmittel (9) umfasst, die angepasst sind zum Positionieren und Eingreifen in die Deckenfläche eines Moduls (1) und in die Bodenfläche eines zweiten Moduls (1), wobei das modulare System weiter mindestens eine Erweiterungsplatte (8) umfasst, die eine obere Erweiterungsoberfläche und eine untere Erweiterungsoberfläche umfasst, wobei weiter die obere Erweiterungsoberfläche der Bodenfläche (17) zugewandt ist, wobei weiter die untere Erweiterungsfläche der Deckenfläche (16) zugewandt ist, jene Erweiterungsplatte (8) Befestigungsmittel (12) umfasst, die angepasst sind, um mit den Positionierungsmitteln (9) einzugreifen, wodurch die Erweiterungsplatte (8) befestigt wird, jene Positionierungsmittel (9) im Randbereich der äußeren Deckenfläche (16) und der äußeren Bodenfläche (17) entlang der Kante, die zwischen der Regaldeckenplatte (3) und den zwei Regalseitenplatten (5,6) beziehungsweise der Regalbodenplatte (4) und den zwei Regalseitenplatten (5,6) bereitgestellt ist, in einem Abstand d von jenen Kanten platziert sind und damit die Befestigungsmittel (12) der Erweiterungsplatte (8) im selben Abstand d von zwei der Begrenzungsseitenkanten der Erweiterungsplatte platziert sind, wobei jene Seitenkanten einander gegenüber liegen, jene Positionierungsmittel eine Pater/Mater-Anordnung umfassen, so dass eine Deckenfläche (16) und ein erstes Modul (1) einen Mater-Teil umfassen und die angrenzende Bodenfläche (16) auf einem zweiten Modul auch einen Mater-Teil umfasst, und dass der Pater-Teil mittels eines lösbaren Dübels (11) bereitgestellt wird, die zwei Begrenzungsendteile (21) des Dübels angepasst sind, um in jedes ihrer Mater-Teile platziert zu werden und dass der Mater-Teil der Positionierungsmittel Vertiefungen, z.B. in Form von Bohrungen/Löchern (10), zum Aufnehmen des Pater-Teils in der Form von entsprechenden Dübeln umfasst, wobei die Längsachse jener Dübel (11) im Wesentlichen senkrecht auf der Oberfläche aus der sie herausragen sind und jene Längsachse achsenparallel mit der Längsachse der Vertiefung (10) ist, **dadurch gekennzeichnet, dass** die Bohrungen (10) in der Begrenzungsoberfläche (18) der ersten Regalseitenplatte (5) liegen und die zweite Seitenplatte (6) achsenparallel mit den flachen Seitenflächen der Seitenplatten ist, jene Begrenzungsoberflächen (18) einen Teil der Deckenfläche (16) und der Bodenfläche (17) darstellen, und dass die Module eine Rückseitenplatte (7) in der Form eines rechteckigen oder quadratischen Bretts umfassen, wobei der Umfang (7) jenes Bretts mit dem Innenquerschnitt des Moduls deckungsgleich ist, so dass die Kanten der Rückseitenplatte (7) umgeben sind von und an den Oberflächen anliegen, die dem inneren Hohlraum des Moduls zugewandt sind.

2. Modulares System entsprechend Anspruch 1, **dadurch gekennzeichnet, dass** der lösbare Dübel einen Mittelteil (22) umfasst, der angepasst ist, um mit den Befestigungsmittel (12) der Erweiterungsplatte (8) einzugreifen, wobei jene Erweiterungsplatte (8) angepasst ist, um in einer Position zwischen den beiden Modulen (1) befestigt zu werden.

3. Modulares System entsprechend den Ansprüchen 1-2, **dadurch gekennzeichnet, dass** die Bohrungen (10) in der Deckenfläche (16) und der Bodenfläche (17) platziert sind, jene Bohrungen im Abstand d von den Begrenzungskanten der Oberflächen positioniert sind, wobei jene Kanten an den Regalseitenplatten (5,6) anliegen.

4. Modulares System entsprechend den Ansprüchen 1-3, **dadurch gekennzeichnet, dass** die Bohrungen (10), die in jeder Begrenzungskantenoberfläche (18) platziert sind, zwei getrennte Bohrungen/Löcher (10) umfassen, die symmetrisch um die Mittellinie (l', l") der Decken- und Bodenfläche (16, 17) platziert sind.

5. Modulares System entsprechend irgendeinem der vorhergehenden Ansprüche, **dadurch gekennzeichnet, dass** die Befestigungsmittel (12) der Erweiterungsplatte (8) zwei Durchgangslöcher (19) in der Erweiterungsplatte entlang einer der Begrenzungskanten, wobei jene Durchgangslöcher (19) symmetrisch in Bezug auf die Mittellinie (l") der Platte platziert sind, und zwei entsprechende gegenüberliegende Durchgangslöcher (19) in der Erweiterungsplatte entlang der gegenüberliegenden Begrenzungskante umfassen, wodurch jene Erweiterungsplatte vier Erweiterungsplattenlöcher (19) mit einem Durchmesser, der im Wesentlichen identisch mit dem Durchmesser der Positionierungsmittel ist, umfasst.

6. Modulares System entsprechend irgendeinem der vorhergehenden Ansprüche, **dadurch gekennzeichnet, dass** das System mindestens zwei Module, die senkrecht aufeinander platziert sind und so dass die äußeren Oberflächen der ersten und zweiten Regalseitenplatten (5,6) miteinander bündig sind, und eine Erweiterungsplatte (8), die zwischen der Deckenfläche (16) und der Bodenfläche (17) der beiden Module liegt, umfasst, und dadurch, dass die Positionierungsmittel (9) die Befestigungsmitteln (12) der Erweiterungsplatte (8) erfassen/eingreifen, wodurch die Erweiterungsplatte (8) in einer Position zwischen den zwei Modulen (1) befestigt wird.

7. Modulares System entsprechend irgendeinem der vorhergehenden Ansprüche, **dadurch gekennzeichnet, dass** die Regaldeckenplatte und die Regalbodenplatte dieselbe Geometrie und Dimension in jedem Modul haben, wobei die Platten als rechteckige oder quadratische Bretter geformt sind.

8. Modulares System entsprechend irgendeinem der vorhergehenden Ansprüche, **dadurch gekennzeichnet, dass** jedes Modul durch rechteckige oder quadratische Bretter aufgebaut ist, wobei jene Bretter durch Verbindungselemente zum Bereitstellen eines kastenförmigen Moduls verbunden sind, und dadurch, dass die zwei Regalseitenplatten (5,6) Begrenzungskanten haben, die Teil der äußeren Deckenfläche und äußeren Bodenfläche (17) sind, und dadurch, dass die Positionierungsmittel in jene Begrenzungskanten platziert sind.

9. Modul für ein modulares System entsprechend irgendeinem der vorhergehenden Ansprüche, jenes Modul (1) umfassend eine Regaldeckenplatte (3) und eine gegenüberliegende Regalbodenplatte (4), wobei jene zwei Platten miteinander über eine erste Regalseitenplatte (5) und eine gegenüberliegende zweite Regalseitenplatte (6) verbunden sind, um ein kastenförmiges Modul (1) umfassend eine äußere Deckenoberfläche (16) und eine äußere Bodenfläche (17) bereitzustellen, wobei jenes Module (1) Positionierungsmittel (9) umfasst, die angepasst sind zum Positionieren eines Moduls (1) mit einem zweiten Module (1), wobei weiter die Positionierungsmittel eine Pater/Mater-Anordnung umfassen, so dass eine Deckenfläche (16) des Moduls (1) einen Mater-Teil umfasst, und dass der Pater-Teil durch einen lösbaren Dübel (11) bereitgestellt wird, die zwei Begrenzungsendteile (21) des Dübels angepasst sind, um entsprechend in den Mater-Teil des Moduls und in den Mater-Teil, der sich auf der angrenzenden Bodenfläche eines zusätzlichen Moduls befindet, platziert zu werden, und dass der Mater-Teil der Positionierungsmittel Vertiefungen, z.B. in Form von Bohrungen/Löchern (10), zum Aufnehmen des Pater-Teils in der Form entsprechender Dübel umfasst, wobei die Längsachse jener Dübel (11) im Wesentlichen senkrecht auf der Oberfläche aus der sie herausragen ist und jene Längsachse achsenparallel mit der Längsachse der Vertiefung (10) ist, **dadurch gekennzeichnet, dass** die Bohrungen (10) in der Begrenzungsoberfläche (18) der ersten Regalseitenplatte (5) platziert sind und die zweite Seitenplatte (6) achsenparallel mit den flachen Seitenflächen der Seitenplatten ist, jene Begrenzungsoberflächen (18) einen Teil der Deckenfläche (16) und der Bodenfläche (17) darstellen, und dass die Module eine Rückseitenplatte (7) in der Form eines rechteckigen oder quadratischen Bretts umfassen, wobei der Umfang (7) jenes Bretts mit dem Innenquerschnitt des Moduls deckungsgleich ist, so dass die Kanten der Rückseitenplatte (7) umgeben sind von und an den Oberflächen anliegen, die dem inneren Hohlraum des Moduls zugewandt sind.

## Revendications

1. Système modulaire (2) comprenant au moins deux modules (1), lesdits modules comprenant un panneau supérieur d'étagère (3) et un panneau inférieur d'étagère (4) placé à l'opposé, lesdits deux panneaux étant mutuellement raccordés par un premier panneau latéral d'étagère (5) et un second panneau latéral d'étagère (6) placé à l'opposé pour proposer un module en forme de boîte (1) comprenant une surface supérieure externe (16) et une surface inférieure externe (17), ledit système modulaire (2) comprenant des moyens de positionnement (9) adaptés pour positionner et se mettre en prise avec la surface supérieure d'un module (1) et avec la surface inférieure d'un second module (1), en outre le système modulaire comprend au moins un panneau d'extension (8) comprenant une surface d'extension supérieure et une surface d'extension inférieure, en outre la surface d'extension supérieure fait face à la surface inférieure (17), en outre la surface d'extension inférieure fait face à la surface supérieure (16), ledit panneau d'extension (8) comprenant des moyens de fixation (12) adaptés pour se mettre en prise avec les moyens de positionnement (9), moyennant quoi le panneau d'extension (8) est fixé, lesdits moyens de positionnement (9) sont placés à la périphérie de la surface supérieure externe (16) et de la surface inférieure externe (17) le long du bord qui est prévu entre le panneau supérieur d'étagère (3) et les deux panneaux latéraux d'étagère (5, 6) et le panneau inférieur d'étagère (4) et les deux panneaux latéraux d'étagère (5, 6) respectivement à une distance d desdits bords et en ce que les moyens de fixation (12) du panneau d'extension (8) sont placés à la même distance d de deux des bords latéraux de délimitation du panneau d'extension, lesdits bords latéraux étant placés à l'opposé l'un de l'autre, lesdits moyens de positionnement comprennent un agencement mâle/femelle de sorte qu'une surface supérieure (16) sur un premier module (1) comprend une partie femelle, et la surface inférieure adjacente sur un second module comprend également une partie femelle, et en ce que la partie mâle est prévue au moyen d'une goupille de positionnement détachable (11), les deux parties d'extrémité de délimitation (21) de la goupille de positionnement étant adaptées pour être placées dans chacune de leur partie femelle et en ce que la partie femelle des moyens de positionnement comprend des évidements, par exemple sous la forme d'alésages / trous (10), pour la réception de la partie mâle sous la forme de goupilles de positionnement respectives, l'axe longitudinal desdites goupilles de positionnement (11) étant essentiellement perpendiculaire sur la surface de laquelle elles font saillie et ledit axe longitudinal étant axialement parallèle à l'axe longitudinal de l'évidement (10), **caractérisé en ce que** les alésages (10) sont placés dans la surface de bord de délimitation (18) du premier panneau latéral d'étagère (5) et le second panneau latéral (6) est axialement parallèle aux surfaces latérales planes des panneaux latéraux, lesdites surfaces de bord de délimitation (18) constituant une partie de la surface supérieure (16) et de la surface inférieure (17) et **en ce que** le module comprend un panneau latéral arrière (7) se présentant sous la forme d'une planche rectangulaire ou carrée, la circonférence (7) de ladite planche étant conforme à la section transversale intérieure du module de sorte que les bords du panneau latéral arrière (7) sont entourés par et viennent en butée contre les surfaces faisant face à la cavité interne du module.

2. Système modulaire selon la revendication 1, **caractérisé en ce que** la goupille de positionnement détachable comprend une section centrale (22) adaptée pour se mettre en prise avec les moyens de fixation (12) du panneau d'extension (8), ledit panneau d'extension (8) étant adapté pour être fixé dans une position entre les deux modules (1).

3. Système modulaire selon les revendications 1 à 2, **caractérisé en ce que** les alésages (10) sont placés dans la surface supérieure (16) et dans la surface inférieure (17), lesdits alésages (10) étant positionnés à la distance d du bord de délimitation des surfaces, ledit bord venant en butée contre les panneaux latéraux d'étagère (5, 6).

4. Système modulaire selon les revendications 1 à 3, **caractérisé en ce que** les alésages (10) placés dans chaque surface de bord de délimitation (18) comprennent deux alésages / trous séparés (10) placés symétriquement autour de la ligne centrale (l', l") des surfaces supérieure et inférieure (16, 17).

5. Système modulaire selon l'une quelconque des revendications précédentes, **caractérisé en ce que** les moyens de fixation (12) du panneau d'extension (8) comprennent deux trous débouchants (19) dans le panneau d'extension le long de l'un des bords de délimitation, lesdits trous débouchants (19) étant placés symétriquement par rapport à la ligne centrale (l') du panneau, ainsi que deux trous débouchants correspondants (19) placés à l'opposé dans le panneau d'extension le long du bord de délimitation placé à l'opposé, moyennant quoi ledit panneau d'extension comprend quatre trous de panneau d'extension (19) ayant un diamètre essentiellement identique au diamètre des moyens de positionnement.

6. Système modulaire selon l'une quelconque des revendications précédentes, **caractérisé en ce que** le système comprend au moins deux modules placés verticalement l'un sur le dessus de l'autre et de sorte que les surfaces externes des premier et second panneaux latéraux d'étagère (5, 6) sont de niveau entre elles, ainsi qu'un panneau d'extension (8) placé entre la surface supérieure (16) et la surface inférieure (17) des deux modules, et **en ce que** les moyens de positionnement (9) saisissent / se mettent en prise avec les moyens de fixation (12) du panneau d'extension (8), moyennant quoi le panneau d'extension (8) est fixé dans une position située entre les deux modules (1).

7. Système modulaire selon l'une quelconque des revendications précédentes, **caractérisé en ce que** le panneau supérieur d'étagère et le panneau inférieur d'étagère ont la même géométrie et la même dimension dans chaque module, lesdits panneaux étant formés comme des planches rectangulaires ou carrées.

8. Système modulaire selon l'une quelconque des revendications précédentes, **caractérisé en ce que** chaque module est construit avec des planches rectangulaires ou carrées, lesdites planches étant assemblées en assemblant des éléments pour fournir le module en forme de boîte, et **en ce que** les deux panneaux latéraux d'étagère (5, 6) ont des bords de délimitation, qui font partie de la surface supérieure externe et de la surface inférieure externe (17) et **en ce que** les moyens de positionnement sont placés dans lesdits bords de délimitation.

9. Module pour un système modulaire selon l'une quelconque des revendications précédentes, ledit module (1) comprenant un panneau supérieur d'étagère (3) et un panneau inférieur d'étagère (4) placé à l'opposé, lesdits deux panneaux étant raccordés entre eux par un premier panneau latéral d'étagère (5) et un second panneau latéral d'étagère (6) placé à l'opposé pour fournir un module en forme de boîte (1) comprenant une surface supérieure (16) et une surface inférieure (17), ledit module (1) comprenant des moyens de positionnement (9) adaptés pour positionner un module (1) sur un second module (1), en outre les moyens de positionnement comprennent un agencement mâle / femelle, de sorte qu'une surface supérieure (16) du module (1) comprend une partie femelle, et en ce que la partie mâle est prévue par une goupille de positionnement détachable (11), les deux parties d'extrémité de délimitation (21) de la goupille de positionnement étant adaptées pour être placées respectivement dans la partie femelle du module et dans la partie femelle positionnée sur la surface inférieure adjacente d'un module supplémentaire et en ce que la partie femelle des moyens de positionnement comprennent des évidements, c'est-à-dire se présentant sous la forme d'alésages / trous (10), pour la réception de la partie mâle sous la forme de goupilles de positionnement respectives, l'axe longitudinal desdites goupilles de positionnement (11) étant essentiellement perpendiculaire sur la surface de laquelle elles font saillie, et ledit axe longitudinal étant axialement parallèle à l'axe longitudinal de l'évidement (10), **caractérisé en ce que** les alésages (10) sont placés dans la surface de bord de délimitation (18) du premier panneau latéral d'étagère (5) et le second panneau latéral (6) est axialement parallèle aux surfaces latérales planes des panneaux latéraux, lesdites surfaces de bord de délimitation (18) constituant une partie de la surface supérieure (16) et de la surface inférieure (17) et **en ce que** le module comprend un panneau latéral arrière (7) se présentant sous la forme d'une planche rectangulaire ou carrée, la circonférence (7) de ladite planche étant conforme avec la section transversale intérieure du module de sorte que les bords du panneau latéral arrière (7) sont entourés par et viennent en butée contre les surfaces faisant face à la cavité interne du module.
